# EUROPEAN PATENT SPECIFICATION

(11) **EP 3 258 326 B1**
(45) Date of publication and mention of the grant of the patent: **09.06.2021**
(21) Application number: 16748770.1
(22) Date of filing: 09.02.2016
(51) Int. Cl.: G05B 15/02, G05B 11/01, H04Q 9/00, H04B 3/54

(54) **AUTOMATED CONTROL SYSTEM FOR HOMES**
AUTOMATISIERTES STEUERUNGSSYSTEM FÜR WOHNGEBÄUDE
SYSTÈME DE COMMANDE DOMOTIQUE POUR HABITATIONS

(30) Priority: 13.02.2015 ES 201530177
(43) Date of publication of application: 20.12.2017
(73) Proprietor: Lilo Technology, S.L., 06380 Jerez de los Caballeros (Badajoz) (ES)
(72) Inventor: BARBOSA SIRGADO, Raúl, 06380 Jerez de los Caballeros (Badajoz) (ES)
(74) Representative: Ungria López, Javier
(86) International application number: PCT/ES2016/070073
(87) International publication number: WO 2016/128600

(56) References cited:
- WO-A1-01/37535
- GB-A- 2 516 514
- US-A1- 2005 184 867
- Aizo: "digitalSTROM --Server dSS11", digitalSTROM, 26 February 2011 (2011-02-26), XP055434250, Retrieved from the Internet: URL:http://www.produktinfo.conrad.com/date nblaetter/1300000-1399999/001387462-da-01- de-DIGITALSTROM_SERVER.pdf [retrieved on 2017-12-12]
- Aizo: "digitalSTROM SW-AKM200/SW-AKM210/SW-AKM220", digitalSTROM, 22 April 2013 (2013-04-22), XP055434240, Retrieved from the Internet: URL:http://www.produktinfo.conrad.com/date nblaetter/1300000-1399999/001387475-an-01- ml-JOKER_AUTOMATISIERUNGSKLEMME_de_en_fr_i t.pdf [retrieved on 2017-12-12]
- Aizo: "digitalSTROM GE-TKM210", , 1 December 2012 (2012-12-01), XP055434243, Retrieved from the Internet: URL:http://www.produktinfo.conrad.com/date nblaetter/1300000-1399999/001387468-an-01- ml-LICHT_TASTERKLEMME_1_FACH_MI_de_en_fr_i t.pdf [retrieved on 2017-12-12]

## Description

### OBJECT OF THE INVENTION

The object of the present invention refers to an automated control system for homes.

It is of particular use in the field of home automation industries.

### TECHNICAL PROBLEM TO SOLVE AND BACKGROUND OF THE INVENTION

Nowadays, home automation is not evolving as expected mainly due to the fact that in order to automate a home it is necessary to previously carry out a previous project or some kind of construction work, and in the case of wireless devices, where these tasks are not necessary, they have the problem of maintenance and of the reach of radio waves. In addition, in order to automate a home it is necessary to install a large number of different devices for different functions and in different places, which complicates the installation process. This is the case, for example, of the system of document US 2005/184867, where it is disclosed a home intrusion confrontation avoidance system.

However, the system of the present invention makes it possible to bring home automation to every home thanks to the capacity of the system to adapt to the home, instead of the home adapting to the system, as is currently the case with home automation.

This system comprises mainly two devices: a server, only one is needed for each home, and at least one client device for each room to be automated, which keeps the server updated of the changes taking place in the room in which it is located, and depending on these changes, the server via the instructions given by the user, instructs the client device the actions that it must carry out.

In order to install this system it is only necessary to replace the common strips of the electrical junction box of the electrical installation of the home for the client device, which is connected to the wiring of said electrical junction box. That is, the electrical junction boxes are not given a different use from the one they were created for, so this facilitates the task since both their size and location have been previously studied by architects in order to make the electrical installation the simplest and most comfortable possible.

By placing the client device in the electrical junction boxes of the home, it provides access to each and every one of the cables in the electrical wiring, since the connections of all the wiring in the electrical installation of the home are carried out in these electrical junction boxes, allowing it to control any device that is connected to the electrical grid (lights, plugs, automatic entry phones, blinds, etc.).

This system makes it possible for a single system such as the client device to comprise both actuators and sensors, so that they have total control over the room and the ambient thereof. By contrast, the rest of the products available in the market use actuators and sensors separately, which clutters up a room with different devices, wireless sensors and different actuators, depending on what needs to be automated.

Since the electrical junction box may also comprise power cables, the system draws power directly from said cables, avoiding the need for batteries, and without requiring maintenance. By contrast, the devices in the market need batteries or cabling to one of the power outlets. Batteries cause users great discomfort while home automation is aimed at exactly the opposite, to provide the consumer the maximum comfort possible.

Therefore, the present invention solves of the aforementioned problems of the state of the art, providing a system that has the following advantages:
- Simple: the system is formed of two main types of devices: "server" and "client device", and additionally by an "auxiliary client device".
- Universal: it can be installed in all homes, hotels, stores, bars... that have already been built or that are going to be built.
- Quick installation: it takes little time (a few minutes installing each device) and can be done by the users themselves.
- No construction works: no kind of construction work, prior project or cabling is needed, nothing at all.
- No maintenance: once the system has been installed, users do not need to take care of it.
- Low consumption: this system saves more electricity than it consumes.
- Ease of use: it can be controlled by means of the server, manually or by means of a device with internet connexion from anywhere in the world.
- Intelligent: the devices can be automatically updated through the internet, making it possible in this way to solve problems, improve the applications, etc.
- Infinite functionality: the system is configured to carry out at least one of the following functions, controlling and regulating lights; controlling the plugs of all the electrical and electronic devices of the home; controlling the temperature of the rooms; controlling the fire alarm; controlling the security alarm; controlling the emission and detection of sounds; controlling the blinds; controlling infrared wireless devices; controlling automatic doors; controlling energy saving; controlling the doorbell; warning of a power cut, and controlling the garage doors. In addition, the updating capability thereof helps make this system limitless, so that potential new functions might be constantly created for it in the future.
- Inexpensive.

### DESCRIPTION OF THE INVENTION

The present invention refers to an automated control system for being installed in any home that makes it possible to control the electrical and electronic devices installed in said home, which comprises: a server for each home, said server comprising a control unit (with or without a touchscreen) for controlling and communicating with some client devices, and for storing information received from the client devices; a first PLC that sends and receives information from the client devices, a transformer that powers the server, and a housing; wherein the automated control system also comprises at least one client device arranged in each room of the home to be automated, said client device connected to the wiring of the electrical junction box of the electrical installation of the home and comprising a headpiece, which is located on the exterior of the electrical junction box, which comprises a plurality of sensors, a plurality of actuators, a second PLC, a transformer and a microcontroller, said headpiece being connected to a connector strip, located inside or outside the electrical junction box, wherein said connector strip is connected to the wiring of the electrical junction box.

The at least one client device and the server feed each other and intercommunicate via the wiring of the electrical installation of the home, so that the client devices inform the server, by means of their sensors, of the changes taking place in the room where they are located, and the server, based on the information received, sends instructions to the client devices in order to control the electrical and electronic devices connected to the connector strip.

The control unit comprises a base plate, and it draws power directly from the electrical grid.

When several electrical junction boxes are present in the same room, the system comprises a single client device connected to one of said electrical junction boxes, and it additionally comprises an auxiliary client device for each additional electrical junction box.

The auxiliary client device comprises: a headpiece located on the exterior of the electrical junction box, that comprises a plurality of electronic commuters (switches capable of commuting the alternate current) in order to control the alternate current as instructed by the server; a transformer; a microcontroller and a third PLC in order to maintain the communication between said auxiliary client device and the server; said headpiece being connected to a connector strip, located inside or outside the electrical junction box, wherein said connector strip is connected to the wiring of the electrical junction box.

The connector strips of the client devices (client device and auxiliary client device) are connected to the wiring of the electrical junction box by means of connectors comprised on said connector strips, and they also comprise power inlets, switch input and power outlets. The connection between the connector strips and the headpieces of the client devices (client device and auxiliary client device) is carried out by means of pins in the connector strips, which are inserted in orifices of the headpieces of the client devices.

The plurality of sensors comprised in the headpiece of the client device are selected from a smoke detector to detect the presence of smoke in a room, a movement sensor to detect if there is someone in the room, a microphone for detecting noises, a temperature sensor for controlling the air conditioning of the rooms, an infrared sensor for recording the signals of the remote controls of electrical and electronic devices, a light sensor to check the amount of light there is in the room, and a combination thereof.

The plurality of actuators comprised in the headpiece of the client device are selected from infrared LEDs to reproduce the infrared signals recorded by the infrared sensor, a plurality of electronic commuters (triacs, relays,...) for controlling the electricity sent from the electrical grid to the power outlets as instructed by the server, a loudspeaker for playing music and voice recordings on each of the client devices, and a combination thereof.

It is not necessary for the system to be connected to the internet since the system also operates without it, controlling those devices that are connected to the Wi-Fi network of the home even though it may not be connected to the internet. However, an internet connection is required to allow the communication between a device connected to the internet and the server, in those cases when the home needs to be controlled and said device with internet connexion is not connected to the Wi-Fi network of the home.

The system is configured to carry out, among others, the following functions: controlling and regulating lights; controlling the plugs of the home; controlling the temperature of the rooms; controlling the fire alarm; controlling the security alarm; controlling the emission and detection of sounds; controlling the blinds; controlling infrared wireless devices; controlling automatic doors; controlling energy saving; controlling the doorbell; warning of a power cut and controlling the garage doors.

### BRIEF DESCRIPTION OF THE FIGURES

To complete the description and in order to give a better understanding of the features of the invention, this specification is accompanied by a series of drawings that are an integral part of the same, wherein the following has been represented for illustration purposes and without limitation:

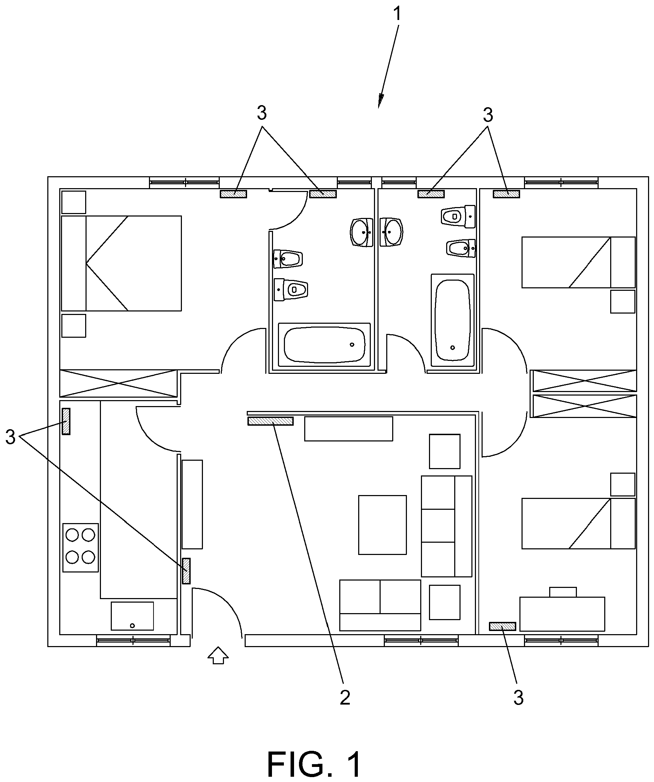

Figure 1 shows the installation of the system in a home.

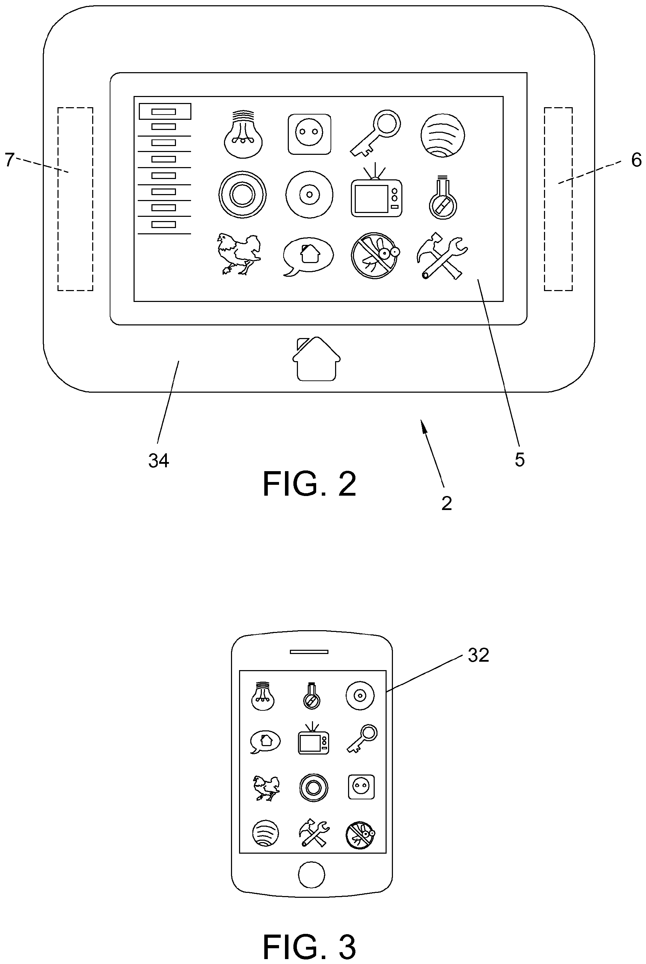

Figure 2 shows the server, displaying the control unit, which in this case has a touchscreen.
Figure 3 shows a device with internet connexion, in this case a Smartphone, with an application similar to the one of the server but adapted to the Smartphone.
Figures 4a, 4b and 4c show an exploded view of a client device and a view showing the client device mounted on the lid that covers the electrical junction boxes. In this case, the connector strip is located inside the electrical junction box. The elements comprised in said client device are shown in detail: the headpiece of the client device and the connector strip.

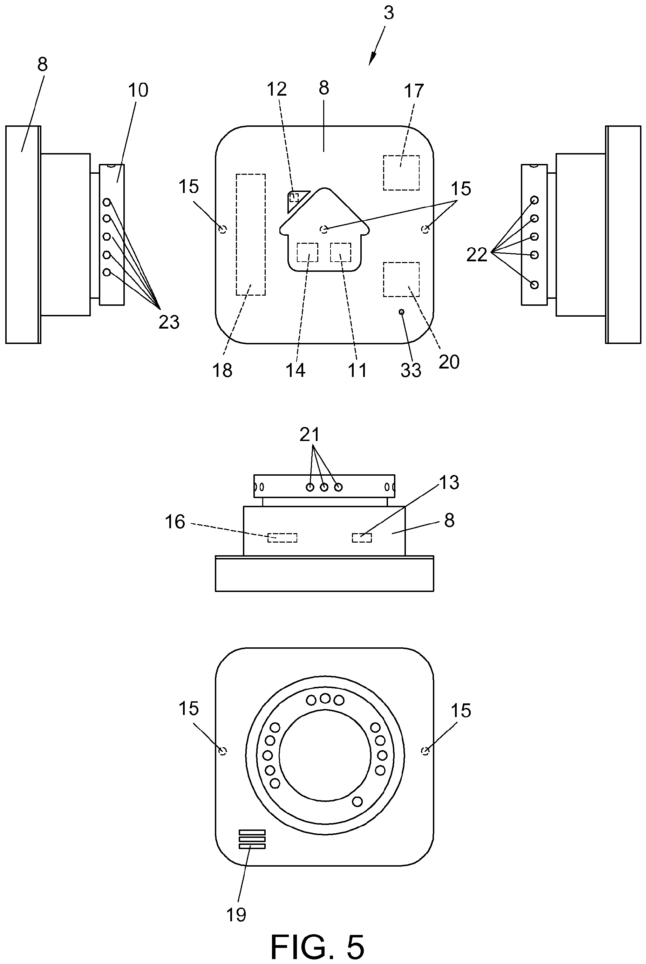

Figure 5 shows different views of the client device and the elements comprised therein.

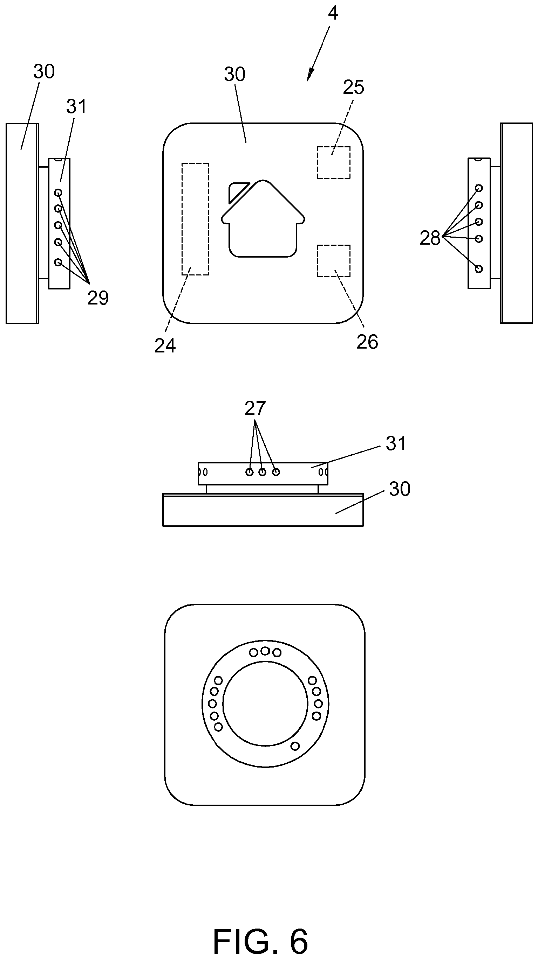

Figure 6 shows different views of the auxiliary client device and the elements comprised therein.

A list of the different elements that have been represented in the figures and which are comprised in the invention is detailed below:
1. System.
2. Server.
3. Client device.
4. Auxiliary client device.
5. Control unit.
6. First PLC (server).
7. Server transformer.
8. Client device headpiece.
9. Junction box lid.
10. Client device connector strip.
11. Movement sensor.
12. Light sensor.
13. Smoke detector.
14. Infrared sensor.
15. Infrared LEDs.
16. Temperature sensor.
17. Client device transformer.
18. Client device electronic commuter.
19. Loudspeaker.
20. Second PLC (client device).
21. Client device power inlet.
22. Client device switch input.
23. Client device power outlets.
24. Auxiliary client device electronic commuter.
25. Auxiliary client device transformer.
26. Third PLC (auxiliary client device).
27. Auxiliary client device power inlet.
28. Auxiliary client device switch input.
29. Auxiliary client device power outlets.
30. Auxiliary client device headpiece.
31. Auxiliary client device connector strip.
32. Device with the internet connexion.
33. Client device microphone.
34. Server housing.
35. Pins of the client device and the auxiliary client device.
36. Holes of the client device and the auxiliary client device.
37. Connectors of the client device and the auxiliary client device.

### DETAILED DESCRIPTION

Throughout the description the automated control system (1) installed in a home is described, but it should not be construed as limiting since this automated control system (1) may be installed in hotels, shops, stores, bars, etc., that is, in any building with an electrical installation with electrical junction boxes.

The automated control system for homes described herein can be installed in any home, no matter how old they may be, provided that they have electrical junction boxes.

The automated control system (1) for homes of the present invention is equipped with electronic and computer applications that allow it to control the electrical and electronic devices installed in said home. Said system (1) mainly comprises two devices:
- a server (2), only one is needed for each home and it acts as the "brain" of the system (1); and
- at least one client device (3) for each room to be automated, which is in charge of keeping the server (2) informed of the changes taking place in the room where it is located, and depending on these changes, the server (2) via the instructions given by the user, either to the server (2) itself or from a device with internet connexion (32) (for example a Smartphone of the user), instructs the client device (3) the actions that it must carry out.

In addition, the system (1) comprises at least one auxiliary client device (4), which is like the client device (3) but does not comprise any sensors and the only actuator it comprises is the electronic commuters. The auxiliary client device (4) is needed for covering all the potential electrical junction boxes in order to have complete control of the installation. There are usually one or several electrical junction boxes in a room, and all of them need to be controlled, that is, this represents placing more than one client device (3) in certain rooms. However, it suffices with a sensor of each type included in the client device (3) for each room. Therefore, the reason for creating the auxiliary client device (4) is of a financial nature, since it is a lot cheaper than the client device (3) and also smaller. So that complementing the room with auxiliary client devices (4) provides the same functionality at a much lower cost than if client devices (3) were to be used.

In order to automate the home it is only necessary to place the different client devices (3, 4) in the electrical junction boxes of the electrical installation of the home. In order to install the client devices (3, 4) the wiring inside the electrical junction box has to be placed in the corresponding place of the client device (3, 4), the client device (3,4) themselves explain how to made such wiring connections.

In order to correctly make the connections it is only necessary to be able to distinguish between the types of cables, which is very simple since these cables have different isolating colours and different sections. In short, the known connector strips of the electrical junction boxes, which are where the wiring connections are made, must be replaced by the client device (3, 4) themselves.

As is commonly known, the normal function of the electrical junction boxes is to facilitate connecting the different cables of the electrical installation, so that said electrical junction boxes are located in accessible places where it is easy to handle the cables. All of this helps to make the installation even easier and quicker. Finally, it is important to highlight that once the system (1) has been installed, the different devices (2, 3, 4) will never have to be handled again. The different devices (2, 3, 4) do not need any maintenance, since they are powered by the electrical grid itself, avoiding batteries that are very inconvenient.

Each of the devices are described in detail below.

The server (2) comprises:
- a control unit (5), with or without a touchscreen, which when it has a touchscreen it shows a general control panel of the client devices (3, 4) on which the user can select the functions to be carried out in order to control each of the rooms in the home. In addition, the server (2) stores the information received from the client devices (3, 4),
- a first PLC (6) for sending and receiving information to and from the client devices (3, 4),
- a transformer (7) for transforming the electricity of the home in order to draw power, and
- a housing (34) for protecting and covering the control unit (5), the first PLC (6) and the transformer (7).

A PLC (Power Line Communications) is defined as a device for transmitting and receiving data through the electrical grid.

It is necessary to clarify that the server (2) executes a specific software developed for controlling the client devices (3, 4). The control unit (5) comprises a base plate with all the microprocessors and controllers thereof. The server (2) is directly connected to the electrical grid and does not need any batteries.

The client device (3) comprises:
- a headpiece (8) located on the exterior of the electrical junction box of the electrical installation of the home, protruding out from the lid (9) of the electrical junction box of the room, and comprises a plurality of sensors (11, 12, 13, 14, 16), a plurality of actuators, a transformer (17), a second PLC (20) that is the same module as the one used in the server (2), and a microcontroller, with said headpiece (8) being connected to
- a connector strip (10) that comprises power inlets (21), switch input (22) and power outlets (23), with said connector strip (10) being connected to the wiring of the electrical junction box.

The sensors comprised in the client device (3) send information about the room to the server (2), and the server (2) in turn, depending on the information received, instructs the client devices (3) everything they have to do with their sensors, their inlets, their outlets, etc. The client devices (3) cannot act on their own at any time unless the server (2) instructs them to do so.

The plurality of sensors comprised in the headpiece (8) of the client device (3) comprise the following, among others:
- a smoke detector (13) for detecting the presence of smoke in the room. The height at which the electrical junction boxes are located provides a very reliable location for the early detection of smoke,
- a movement sensor (11) for detecting if there is someone in the room,
- a microphone (33) for detecting noises, so that it can be known more precisely whether there is someone in the room and also carry out different tasks when hearing a noise, such as for example a hand clap,
- a temperature sensor (16) for controlling the air conditioning of the rooms,
- an infrared sensor (14) for recording the signals of the remote controls, both of televisions as well as air conditioning units, DVD players, projectors,
- a light sensor (12) for checking the amount of light there is in the room and knowing if it is necessary or not to turn on the lights automatically, if it was programmed to do so.

The plurality of actuators comprised in the headpiece (8) of the client device (3) comprise the following, among others:
- infrared LEDs (15) to reproduce the infrared signals recorded by the infrared sensor (14). These infrared LEDs (15) are arranged in such a way that they cover a wide angle, being able to reach anywhere in this way,
- a plurality of electronic commuters (18) in order to feed or cut electricity from the electrical grid to the power outlets. In addition to cutting or closing a circuit, these components are able to vary the frequency at which these actions take place, being able to change the luminosity of light bulbs, and
- a loudspeaker (19) for playing music from the server (2) by means of a second PLC (20) on each of client devices (3) as desired. It also plays voice recordings.

The auxiliary client device (4) comprises:
- a headpiece (30) located on the exterior of the electrical junction box, which comprises a plurality of electronic commuters (24) that have the same function as the client device (3), that is, the same function as a switch, being able to open and close circuits as ordered by the server (2); a transformer (25) for generating the current it operates at; a third PLC (26) to maintain the communications between said auxiliary client device (4) and the server (2), since it is also controlled by the server (2); and a microcontroller, with said headpiece (30) being connected to
- a connector strip (31) connected to the wiring of the electrical junction box, and that comprises power inlets (27), switch input (28) for controlling the switches in the room; and power outlets (29).

As explained above, the auxiliary client device (4) is like the client device (3) but does not comprise any sensors and the only actuator it contains is the electronic commuters. Therefore, since it does not comprise sensors, the dimensions of the auxiliary client device (4) are much smaller.

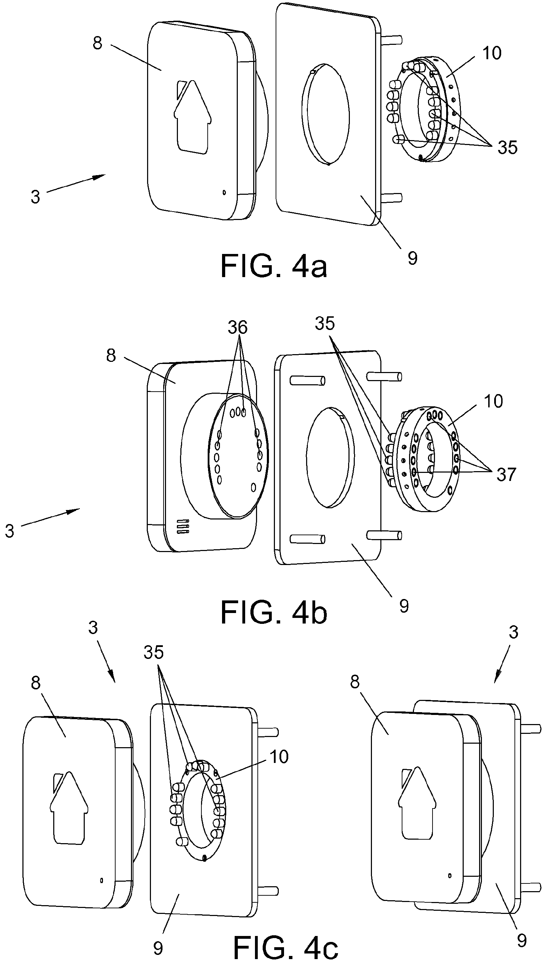

The installation is quick and simple, and only a hole must be made on the lid (9) of the electrical junction box in which the client device (3, 4) is going to be installed, as shown on figures 4a, 4b and 4c. Even the users themselves can carry out said installation. No other type of construction work or prior project is required, nor wiring new cables in the installation nor outside it, nothing needs to be taken apart, and only the cables of the strips of the electrical junction box need to be disconnected and then connected to connectors (37) comprised in the connector strips (10, 31) of the client devices (3, 4).

The connector strips (10, 31) of the client devices (3, 4) are identical to each other. Preferably, in order to connect said connector strips (10, 31) with their respective headpieces (8, 30), it is only necessary to insert some pins (35) that are the extension of the connectors (37) comprised in the connector strips (10, 31) in the respective holes (36) of the headpieces (8, 30) of the client device (3, 4).

The cables of the general power supply line are connected to the power inlets (21, 27), both for powering the client devices (3, 4) and the devices connected to the electrical grid; the cables coming from the switches are connected to the switch inputs (22, 28); while the power supply cables of the different elements of the electrical installation, such as lights and plugs (independently of whatever is connected to said plugs) are connected to the power outlets (23, 29); the cables of the junction box are connected in their corresponding place to the connectors (37) located in the connector strips (10, 31) of the client devices (3, 4).

The switch inputs (22, 28) are used to control each of the switches in the room. In this way, the server (2) will know if a light has been manually turned on or off, so that it can control said action.

The communication between the different client devices (3, 4) and the server (2) takes place through the cables of the electrical installation (the same cables that supply electricity are used to transmit information from some devices to others) using carrier currents. This feature makes it possible to avoid having to lay down any cables in the electrical installation, facilitating the installation procedure. It also ensures a good communication between the different client devices (3, 4) and the server (2), since as communication takes place through cables, it does not matter how far the different client devices (3, 4) and the server (2) are, or how wide the walls are, as opposed to what happens with wireless communications. Additionally, the wireless devices of different nearby homes may cause installation errors; however, since the electrical installations of each home are completely isolated from the rest, this type of communication avoids interferences with adjacent homes.

Carrier currents are used to send information through these power lines. The principle of this technology consists of superimposing on the 50 Hz alternate electrical signal another low energy and higher frequency signal. This second signal travels through the electrical installation and can be received by any receiver in the same electrical grid. In this way, what the server (2) or any client device (3, 4) sends is received by the other installed devices.

As can be observed, the system (1) of the present invention is able to control any kind of device that operates by means of a remote control; any kind of bulb (halogens, low consumption and normal light bulbs, light bulbs with different bases, etc.); any kind of switch whatever form they may be; all plugs; all kinds of heating, whether with a digital or a metal thermostat..., etc. In short, in order to have a completely automated home it is only necessary to install the system (1) of the invention, without having to change a single one of the devices of the home in order to control it.

In addition, the system (1) of the present invention can not only be controlled by the server (2), or manually, with manually meaning the way that each device was controlled before automating the home, for example: lights can still be turned on and off using their corresponding switch, the TV with its remote control, etc., but it can also be controlled remotely, as explained previously, by means of any device with internet connexion (32) (a mobile phone, tablet or computer of the user), which is connected to the internet or to the Wi-Fi network of the home. These devices with internet connexion (32) communicate with the server (2) though the internet or through the Wi-Fi network itself, and then it is the server (2) that sends the instructions to the different client devices (3, 4). These devices with internet connexion (32) must incorporate a similar application to the one of the server (2), which is accessed by pressing on the different icons visualised, which makes it quick and easy to use.

As explained above, all the decisions are carried out by means of the server (2) program. The devices with internet connexion (32) (smartphones, tablets, computers, etc...,) that can control the home may be able to install the application regardless of whatever their operative system is. Both the applications of the devices with internet connexion (32) as those of the server (2) are very intuitive and easy to use. Best of all, these applications can be modified and improved as desired, or even very specific applications required by a user may be developed. Said applications could be added to the system (1) by downloading them from the internet.

The system (1) of the invention and the program of said system can control an endless number of devices, such as lights regulating their luminosity. In addition to having total control of lighting, a light may be associated with the alarm clock so that it turns on at the same time the alarm clock rings, controlling the time it is on, the programming thereof, etc. In the same way, all the plugs can be controlled, which means being able to turn on and off each and every one of the devices connected to them: heaters, lamps, televisions, etc., with the user being able to decide when they are connected, how long they operate for, and many other possible options. In addition, any device can be directly connected to the client devices (3, 4) without having to connect the device to any plug in order to operate, that is: the fixed devices of the home may be connected so that they can still be controlled and they also do not take any plugs.

And many other devices that operate through remote controls, such as: projectors, the cigarette machine of a bar, computers, etc.

If the power supply of a home is interrupted, whether because of the company providing electricity or because one of the security switches of the electrical installation was actuated, the system (1) will warn the user of the power cut by sending a message.

In addition, another potential function of the system (1) is the security alarm since the system (1) is constantly listening to ambient sounds and detecting any movement, in addition to also controlling all the switches and the power cuts.

As explained above, the functionality of the system (1) has no limits. It is possible to add new applications, improvements for each application, etc.

The present invention is not limited by the embodiment disclosed herein. Other embodiments can be made by persons skilled in the art in light of this description. In consequence, the scope of the invention is defined by the following claims.

## Claims

1. Automated control system (1) for controlling electrical and electronic devices installed in a home, the system is **characterized in that** it comprises:
- a server (2) comprising:
• a control unit (5) for controlling and communicating with some client devices (3);
• a first Power Line Communications "PLC" device (6) configured to allow sending and receiving information to and from the client devices (3) through the electrical grid; and
• a transformer (7) for powering the server (2);
- at least one client device (3) located in each room of the home, where the client device is connected to the wiring of an electrical junction box of the electrical installation of the home, and the client device comprises:
• a connector strip (10) connected to the wiring of the electrical junction box; wherein the connector strip comprises power inlets (21, 27), switch inputs (22, 28) and power outlets (23, 29);
• a headpiece (8) located on the exterior of the electrical junction box, the headpiece comprising a plurality of sensors (11,12,13,14,16), a plurality of actuators (15,18,19), a second PLC device (20), a transformer (17) and a microcontroller, with said headpiece (8) being connected to the connector strip;
wherein the at least one client device (3) and the server (2) feed and intercommunicate each other via the wiring of the electrical installation of the home, so that the client devices (3) inform the server (2) by means of the sensors (11, 12, 13, 14, 16) of the changes taking place in the room where they are located, and the server (2) via instructions given by the user, either to the server (2) itself or from a device with internet connection (32), instructs the client device (3) the actions that it must carry out to control any of the electrical and electronic devices of the home that are connected to the electrical grid.

2. Automated control system (1) according to claim 1, **characterized in that** when there are several electrical junction boxes in the same room, the system (1) comprises a single client device (3) connected to one of said electrical junction boxes, and it also comprises an auxiliary client device (4) for each additional electrical junction box.

3. Automated control system (1) according to claim 2, **characterized in that** the auxiliary client device (4) comprises:
• a headpiece (30) located on the exterior of the electrical junction box, that comprises a plurality of electronic commuters (24) to control the current as instructed by the server (2); a transformer (25); a third PLC device (26) to maintain the communication between said auxiliary client device (4) and the server (2) and a microcontroller, said headpiece (30) being connected to
• a connector strip (31) connected to the wiring of the electrical junction box.

4. Automated control system (1) according to claims 1 or 3, **characterized in that** the connector strips (10, 31) of the client devices (3) and of the auxiliary client devices (4) are connected to the wiring of the electrical junction box by means of connectors (37) comprised in said connector strips (10, 31).

5. Automated control system (1) according to claim 4, **characterized in that** the connection between the connector strips (10, 31) and the headpieces (8, 30) of the client devices (3) and the auxiliary client devices (4) is carried out by means of some pins (35) of the connector strips (10, 31), which are inserted in some holes (36) of the headpieces (8, 30) of the client devices (3, 4).

6. Automated control system (1) according to claim 1, **characterized in that** the control unit (5) comprises a base plate, and draws power from the electrical grid.

7. Automated control system (1) according to claim 1, **characterized in that** the plurality of sensors comprised in the headpiece (8) of the client device (3) are selected from:
- a smoke detector (13) for detecting the presence of smoke in the room,
- a movement sensor (11) for detecting if there is someone in the room,
- a microphone (33) for detecting noises,
- a temperature sensor (16) for controlling the air conditioning of the rooms,
- an infrared sensor (14) for recording the signals of the remote controls of the electronic and electrical devices,
- a light sensor (12) to check the amount of light there is in the room, and
- a combination thereof.

8. Automated control system (1) according to claim 1, **characterized in that** the plurality of actuators comprised in the headpiece (8) of the client device (3) are selected from:
- infrared LEDs (15) to reproduce the infrared signals recorded by the infrared sensor (14),
- a plurality of electronic commuters (18) for controlling the electricity sent from the electrical grid to the power outlets (23) as instructed by the server (2),
- a loudspeaker (19) for playing music and voice recordings on each of the client devices (3), and
- a combination thereof.

9. Automated control system (1) according to claim 1, **characterized in that** the server (2) is configured to receive orders from at least one device with internet connexion (32) in order to control the system (1) remotely.

## Patentansprüche

1. Automatisiertes Steuerungssystem (1) zum Steuern von in einem Wohngebäude installierten elektrischen und elektronischen Vorrichtungen, wobei das System **dadurch gekennzeichnet ist, dass** es umfasst:
- einen Server (2), der umfasst:
• eine Steuerungseinheit (5) zum Steuern von und Kommunizieren mit einigen Client-Vorrichtungen (3);
• eine erste Stromleitungskommunikationsvorrichtung (Power Line Communications - PLC) (6), die konfiguriert ist, um das Senden und Empfangen von Informationen zu und von den Client-Vorrichtungen (3) über das Stromnetz zu ermöglichen; und
• einen Transformator (7) zum Speisen des Servers (2);
- wenigstens eine Client-Vorrichtung (3), die sich in jedem Raum des Wohngebäudes befindet, in dem die Client-Vorrichtung mit der Verdrahtung eines elektrischen Verteilergehäuses der elektrischen Installation des Wohngebäudes verbunden ist, wobei die Client-Vorrichtung umfasst:
• eine Anschlussschiene (10), die mit der Verdrahtung des elektrischen Verteilergehäuses verbunden ist; wobei die Anschlussschiene Stromeingänge (21, 27), Schalteingänge (22, 28) und Stromausgänge (23, 29) umfasst:
• ein Kopfteil (8), das sich an der Außenseite des elektrischen Verteilergehäuses befindet, wobei das Kopfteil eine Vielzahl von Sensoren (11, 12, 13, 14, 16), eine Vielzahl von Stellelementen (15, 18, 19), eine zweite PLC Vorrichtung (20), einen Transformator (17) und eine Mikrosteuerung umfasst, wobei das Kopfteil (8) mit der Anschlussschiene verbunden ist;
wobei die wenigstens eine Client-Vorrichtung (3) und der Server (2) über die Verdrahtung der elektrischen Installation des Wohngebäudes einander versorgen und miteinander kommunizieren, so dass die Client-Vorrichtungen (3) den Server (2) mittels der Sensoren (11, 12, 13, 14, 16) über die stattfindenden Veränderungen in dem Raum informieren, in dem sie sich befinden, und der Server (2) über vom Benutzer gegebene Anweisungen, entweder an den Server (2) selbst oder von einer Vorrichtung mit Internetanschluss (32), der Client-Vorrichtung (3) die Aktionen anweist, die ausgeführt werden müssen, um alle elektrischen und elektronischen Vorrichtungen des Wohngebäudes zu steuern, die mit dem Stromnetz verbunden sind.

2. Automatisiertes Steuerungssystem (1) nach Anspruch 1, **dadurch gekennzeichnet, dass,** wenn es mehrere elektrische Verteilergehäuse im selben Raum gibt, das System (1) eine einzelne mit einem der elektrischen Verteilergehäuse verbundene Client-Vorrichtung (3) und außerdem eine Client-Nebenvorrichtung (4) für jedes zusätzliche elektrische Verteilergehäuse umfasst.

3. Automatisiertes Steuerungssystem (1) nach Anspruch 2, **dadurch gekennzeichnet, dass** die Client-Nebenvorrichtung (4) umfasst:
• ein an der Außenseite des elektrischen Verteilergehäuses befindliches Kopfteil (30), das eine Vielzahl von elektronischen Commutern (24) umfasst, um den Strom wie vom Server (2) angewiesen zu steuern; einen Transformator (25); eine dritte PLC Vorrichtung (26), um die Kommunikation zwischen der Client-Nebenvorrichtung (4) und dem Server (2) aufrechtzuerhalten, und eine Mikrosteuerung, wobei das Kopfteil (30) verbunden ist mit
• einer Anschlussschiene (31), die mit der Verdrahtung des elektrischen Verteilergehäuses verbunden ist.

4. Automatisiertes Steuerungssystem (1) nach Anspruch 1 oder 3, **dadurch gekennzeichnet, dass** die Anschlussschienen (10, 31) der Client-Vorrichtungen (3) und der Client-Nebenvorrichtungen (4) mit der Verdrahtung des elektrischen Verteilergehäuses mittels Anschlüssen (37) verbunden sind, die in den Anschlussschienen (10, 31) enthalten sind.

5. Automatisiertes Steuerungssystem (1) nach Anspruch 4, **dadurch gekennzeichnet, dass** die Verbindung zwischen den Anschlussschienen (10, 31) und den Kopfteilen (8, 30) der Client-Vorrichtungen (3) und der Client-Nebenvorrichtungen (4) mittels einiger Stifte (35) der Anschlussschienen (10, 31) ausgeführt wird, die in einige Löcher (36) der Kopfteile (8, 30) der Client-Vorrichtungen (3, 4) eingeführt werden.

6. Automatisiertes Steuerungssystem (1) nach Anspruch 1, **dadurch gekennzeichnet, dass** die Steuerungseinheit (5) eine Grundplatte umfasst und Strom aus dem Stromnetz bezieht.

7. Automatisiertes Steuerungssystem (1) nach Anspruch 1, **dadurch gekennzeichnet, dass** die Vielzahl von in dem Kopfteil (8) der Client-Vorrichtung (3) enthaltenen Sensoren ausgewählt wird aus:
- einem Rauchmelder (13) zum Erfassen des Vorhandenseins von Rauch in dem Raum,
- einem Bewegungssensor (11) zum Erfassen, ob sich jemand im Raum befindet,
- einem Mikrofon (33) zum Erfassen von Geräuschen,
- einem Temperatursensor (16) zum Steuern der Klimaanlage der Räume,
- einem Infrarotsensor (14) zum Aufzeichnen der Signale der Fernbedienungen der elektronischen und elektrischen Vorrichtungen,
- einem Lichtsensor (12), um die Lichtmenge zu überprüfen, die es im Raum gibt, und
- einer Kombination davon.

8. Automatisiertes Steuerungssystem (1) nach Anspruch 1, **dadurch gekennzeichnet, dass** die Vielzahl der im Kopfteil (8) der Client-Vorrichtung (3) enthaltenen Stellelemente ausgewählt wird aus:
- Infrarot-LEDs (15), um von dem Infrarotsensor (14) aufgezeichnete Infrarotsignale wiederzugeben,
- einer Vielzahl von elektronischen Commutern (18) zum Steuern des vom Stromnetz zu den Stromausgängen (23) gelieferten Stroms, wie vom Server (2) angewiesen,
- einem Lautsprecher (19) zum Abspielen von Musik und Sprachaufzeichnungen auf jeder der Client-Vorrichtungen (3) und
- einer Kombination davon.

9. Automatisiertes Steuerungssystem (1) nach Anspruch 1, **dadurch gekennzeichnet, dass** der Server (2) konfiguriert ist, um Befehle von wenigstens einer Vorrichtung mit Internetverbindung (32) zu empfangen, um das System (1) fernzusteuern.

## Revendications

1. Système de commande automatisé (1) destiné à contrôler des dispositifs électriques et électroniques installés dans une habitation, le système étant **caractérisé en ce qu'**il comprend :
- un serveur (2) comprenant :
• une unité de commande (5) destinée à contrôler et à communiquer avec certains dispositifs client (3) ;
• un premier dispositif « CPL » (courant porteur de ligne) (6) configuré pour permettre l'envoi et la réception d'informations vers et de la part des dispositifs client (3) par le biais du réseau électrique ; et
• un transformateur (7) destiné à alimenter le serveur (2) ;
- au moins un dispositif client (3) situé dans chaque pièce de l'habitation, dans lequel le dispositif client est connecté au câblage d'un boîtier de jonction électrique de l'installation électrique de l'habitation, et le dispositif client comprend :
• une barrette de connexion (10) reliée au câblage du boîtier de jonction électrique ; dans lequel la barrette de connexion comprend des entrées d'alimentation (21, 27), des entrées de commutation (22, 28) et des prises électriques (23, 29) ;
• un module enfichable (8) situé sur l'extérieur du boîtier de jonction électrique, le module enfichable comprenant une pluralité de capteurs (11, 12, 13, 14, 16), une pluralité d'actionneurs (15, 18, 19), un second dispositif CPL (20), un transformateur (17) et un microcontrôleur, ledit module enfichable (8) étant branché sur la barrette de connexion ;
dans lequel le au moins un dispositif client (3) et le serveur (2) s'alimentent et communiquent entre eux via le câblage de l'installation électrique de l'habitation, de sorte que les dispositifs client (3) informent le serveur (2), à l'aide des capteurs (11, 12, 13, 14, 16), des changements qui ont lieu dans la pièce dans laquelle ils se trouvent, et le serveur (2), via des instructions données par l'utilisateur, soit au serveur (2) lui-même, soit depuis un dispositif qui dispose d'une connexion Internet (32), demande au dispositif client (3) les actions qu'il doit mener pour contrôler n'importe lequel des dispositifs électriques et électroniques de l'habitation qui sont branchés sur le réseau électrique.

2. Système de commande automatisé (1) selon la revendication 1, **caractérisé en ce que**, lorsqu'il y a plusieurs boîtiers de jonction électrique dans la même pièce, le système (1) comprend un seul dispositif client (3) relié à l'un desdits boîtiers de jonction électrique, et comprend en outre un dispositif client auxiliaire (4) pour chaque boîtier de jonction électrique supplémentaire.

3. Système de commande automatisé (1) selon la revendication 2, **caractérisé en ce que** le dispositif client auxiliaire (4) comprend :
• un module enfichable (30) situé sur l'extérieur du boîtier de jonction électrique, qui comprend une pluralité de commutateurs électroniques (24) destinés à contrôler le courant comme cela est demandé par le serveur (2) ; un transformateur (25) ; un troisième dispositif CPL (26) destiné à maintenir la communication entre ledit dispositif client auxiliaire (4) et le serveur (2) et un microcontrôleur, ledit module enfichable (30) étant à
• une barrette de connexion (31) reliée au câblage du boîtier de jonction électrique.

4. Système de commande automatisé (1) selon la revendication 1 ou 3, **caractérisé en ce que** les barrettes de connexion (10, 31) des dispositifs client (3) et des dispositifs client auxiliaires (4) sont reliées au câblage du boîtier de jonction électrique à l'aide de connecteurs (37) compris dans lesdites barrettes de connexion (10, 31).

5. Système de commande automatisé (1) selon la revendication 4, **caractérisé en ce que** la connexion entre les barrettes de connexion (10, 31) et les modules enfichables (8, 30) des dispositifs client (3) et des dispositifs client auxiliaires (4) est effectuée par des broches (35) des barrettes de connexion (10, 31), qui sont insérées dans certains orifices (36) des modules enfichables (8, 30) des dispositifs client (3, 4).

6. Système de commande automatisé (1) selon la revendication 1, **caractérisé en ce que** l'unité de commande (5) comprend une plaque de base, et est alimentée par le réseau électrique.

7. Système de commande automatisé (1) selon la revendication 1, **caractérisé en ce que** les capteurs compris dans le module enfichable (8) du dispositif client (3) sont choisis parmi :
- un détecteur de fumée (13) destiné à détecter la présence de fumée dans la pièce,
- un détecteur de mouvement (11) destiné à détecter la présence d'une personne dans la pièce,
- un microphone (33) destiné à détecter des bruits,
- un capteur de température (16) destiné à contrôler la climatisation des pièces,
- un capteur infrarouge (14) destiné à enregistrer les signaux des commandes à distance des dispositifs électroniques et électriques,
- un détecteur de lumière (12) destiné à vérifier la quantité de lumière dans la pièce, et
- une combinaison de ceux-ci.

8. Système de commande automatisé (1) selon la revendication 1, **caractérisé en ce que** les actionneurs compris dans le module enfichable (8) du dispositif client (3) sont choisis parmi :
- des LED à infrarouges (15) destinées à reproduire les signaux infrarouges enregistrés par le capteur infrarouge (14),
- une pluralité de commutateurs électroniques (18) destinés à contrôler l'électricité envoyée par le réseau électrique vers les prises électriques (23) à la demande du serveur (2),
- un haut-parleur (19) destiné à lire de la musique et des enregistrements vocaux sur chacun des dispositifs client (3), et
- une combinaison de ceux-ci.

9. Système de commande automatisé (1) selon la revendication 1, **caractérisé en ce que** le serveur (2) est configuré pour recevoir des ordres de la part d'au moins un dispositif qui dispose d'une connexion Internet (32) afin de contrôler le système (1) à distance.
